# EUROPEAN PATENT SPECIFICATION

(11) **EP 2 372 340 B1**
(45) Date of publication and mention of the grant of the patent: **11.07.2012**
(21) Application number: 10014982.2
(22) Date of filing: 25.11.2010
(51) Int. Cl.: G01N 19/02

(54) **Mobile measuring kit for determination of longitudinal friction coefficient of roadway surface**
Mobile Messausrüstung zur Bestimmung der longitudinalen Reibungskoeffizienten von Strassenoberflächen
Kit de mesure mobile pour déterminer le coefficient de friction longitudinal de la surface d'une route

(43) Date of publication of application: 05.10.2011
(73) Proprietor: Centrum dopravniho vyzkumu, v.v.i., 636 00 BRNO (CZ)
(72) Inventor: Andres, Josef, 62800 Brno (CZ)
(74) Representative: Malusek, Jiri

(56) References cited:
- EP-A1- 1 201 521
- EP-A1- 1 223 071
- EP-A1- 2 070 740
- US-A- 4 187 714
- US-A- 4 594 878
- US-B1- 6 427 395

## Description

### Background of the Invention

The invention concerns the mobile measuring kit for determination of the longitudinal friction coefficient of a roadway surface.

### State of the art

The longitudinal friction coefficient (fp) plays the most important role in the safety on the roadways. It describes the relation between the longitudinal and the vertical force during the skid friction of tires on the roadway surface in the longitudinal direction. In other words it is an efficiency of the roadway to provide cooperation between moving tires and the roadway surface.

At the present time for determination of the friction coefficient of the roadway surface a pendulum is used, which is provided on its end by rubber block of exact defined characteristics. For an exact measurement it is necessary both to check the shape of the rubber block and to check the characteristics of this material, which can be substantialy changed, due to so-called hardening of the rubber. Another important factor which has to be eliminated in the case of using the pendulum, is the gravitation with respect to the various inclination of the roadway surface (for most of the cases the roadway surface is not perpendicular to the gravitation's direction). It is very slow measurement for fast and operative determination of the longitudinal friction coefficient (fp) of the roadway and dimensions of the pendulum are great. The pendulum is placed in a voluminous transport kit and its setup into the measurement position takes relatively long time.

Another method of determination of the friction coefficient (fp) of the roadway is more exact. It consists of a measuring apparatus, which is placed on a special vehicle (the multifunction measuring vehicles TRT, Griptester or SCRIM).

Said methods are described e.g. in DE 25 53 358 A1, where a frame construction is equipped by a wheel, which is pressed towards the measured surface by spring, whereas the construction is equipped by measuring apparatus.

In WO 01/71315 A1 the measuring apparatus is presented, where the wheel is placed in the front of a truck and the measuring apparatus evaluates informations about the friction of the surface.

A similar complicated apparatus, consisting of a loaded wheel is described in US 4,662,211. Nevertheless all those devices are voluminous, complicated and intended especially for the measurement of airport landing ground etc., so they are not suitable for the normal roadways surface or their application would be extermelly expensive. Those methods are also time wasting, they are not appropriate for fast local mobility measurements of the friction coefficient in various localities.

US-A-4 187 714 reveals a surface friction tester comprising a dynamometer being connectable to a sled to be pulled over e.g. a road surface to be tested whereby the sled may comprise a rubber surface to be pulled over the surface to be tested.

The aim of the present invention is to disclose an apparatus, which is simple and able to determinate quick the friction coefficient of the roadway surface although for orientation purposes.

### Feature 01 me Invention

The above mentioned disadvantages are considerably eliminated by using of the mobile measuring kit for determination of longitudinal friction coefficient of a roadway surface, consisting of a mat of the known surface properties and with a known friction coefficient suitable for the exposition to the same wheater conditions as the measured roadway is exposed for putting down on a part of a measured roadway surface, whereas on the mat a rubber body is provided, which is pullably connected to the dynamometer.

### Description of the Drawings

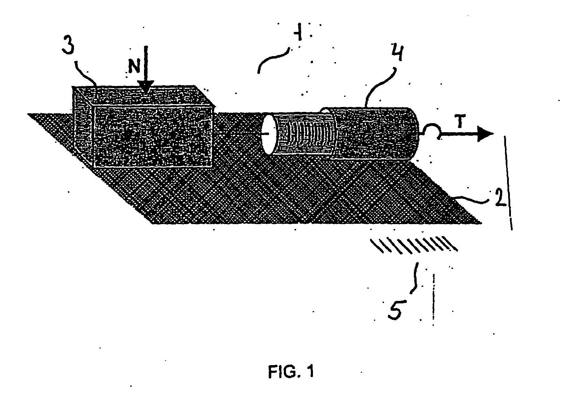

The invention will be further explained by using the drawing, in which Fig. 1 presents the mobile measuring kit for determination of the longitudinal friction coefficient of a roadway surface according to the invention.

### Preferred Embodiments of the Invention

As illustrated in Fig. 1, the mobile measuring kit 1 for determination of the longitudinal friction coefficient of the roadway surface consists of a mat 2, a rubber body 3 and a dynamometer 4.

The measurement is based on a skid movement of the rubber body 3, having known weight and know dimensions of the friction surface on the roadway 5, whereas the force necessary for initiation of the rubber body 3 from a quiet condition to move in direction of the arrow T. Measurement of the necessary force is done on the roadway 5 by calibrated tension dynamometer 4, whereas the maximum force, which is detected by slowly pulling of the spring, is marked. Said procedure exactly copies an effect, when a rolling tire of a braking vehicle is "torn", due to increase of the tangential force, thereby the tire is going to a skid. Due to elimination of the roadway surface inclination, the measurement is done for several times in both directions and afterwards an average value of the friction coeficient is determinated.

By immediately following comparison measurement, which is made on the mat 2 having known surface characteristics with a specific friction coefficient, the mathematical conversion, in other words the friction coefficient, is determinated by comparing them. By this way it is reached that there are the same conditions, especially the same wether conditions, for both the roadway 5 and the mat 2. It was the bigest problem till now, because some specimen of a built roadway, e.g. in a research space, did not corespond with roadway on specific site. Because of that, such measurements although done with the same dynamometer 4, was too in accurate.

Weigh of the whole mobile measuring kit 1 need not to go over 5 kg and the device is easy and quickly applicable just by one operator.

## Claims

1. Mobile measuring kit for determination of longitudinal friction coefficient of roadway surface consisting of a dynamometer, a rubber body, a mat (2) of known surface properties and with a known friction coefficient suitable for the exposition to the same wheater conditions as the measured roadway is exposed for putting down on a part of a measured roadway surface, whereby on the mat (2) the rubber body (3) is provided, which is pullably connected to the dynamometer (4).

## Patentansprüche

1. Mobile Messausrüstung zur Bestimmung der longitudinalen Reibungskoeffizienten von Strassenoberflächen, bestehend aus einem Kraftmesser, Gummikörper und einer Matte der bekannten Eigenschaften und mit dem bekannten Reibungskoeffizienten, die für das Aussetzen zu denselben Wetterbedingungen wie die gemessene Strasse augesetzt ist, geeignet ist, für das Niederlegen an einen Teil von der gemessenen Strassenoberfläche, wobei auf der Matte das Gummikörper angeordnet ist, welches schleppbar mit dem Kraftmesser verbunden ist.

## Revendications

1. Kit de mesure mobile pour determiner le coefficient de friction longitudinal de la surface d'un route composé par un tensiomètre, un corp de gomme, une support (2) avec la qualité de surface connue et avec le coefficient de friction connue, convenable pour l'exposition à la meme conditions de meteo comme la route mesuré est exposé pour placer dans une partie de la surface de la route mesuré, à la support (2) le corp de gomme (3) est placé et le corp de gomme (3) est allié traitement avec le tensiomètre (4).
